# EUROPÄISCHE PATENTSCHRIFT

(11) **EP 1 963 720 B1**
(45) Veröffentlichungstag und Bekanntmachung des Hinweises auf die Patenterteilung: **19.05.2010**
(21) Anmeldenummer: 06828688.9
(22) Anmeldetag: 15.12.2006
(51) Int. Cl.: F16J 1/16, F02F 3/10, F16C 33/20

(54) **VERFAHREN ZUR HERSTELLUNG EINES KOLBEN FÜR EINEN VERBRENNUNGSMOTOR**
METHOD FOR THE PRODUCTION OF A PISTON FOR AN INTERNAL COMBUSTION ENGINE
PROCEDE DE FABRICATION D'UN PISTON POUR MOTEUR A COMBUSTION INTERNE

(30) Priorität: 21.12.2005 DE 102005061063
(43) Veröffentlichungstag der Anmeldung: 03.09.2008
(73) Patentinhaber: Mahle International GmbH, 70376 Stuttgart (DE)
(72) Erfinder: KEMNITZ, Peter, 71397 Leutenbach (DE); KELLER, Klaus, 73547 Lorch (DE)
(74) Vertreter: Pohle, Reinhard
(86) Internationale Anmeldenummer: PCT/DE2006/002257
(87) Internationale Veröffentlichungsnummer: WO 2007/076813

(56) Entgegenhaltungen:
- WO-A-96/07841
- DE-A1- 4 111 368
- DE-A1- 10 255 731
- DE-A1- 19 828 847
- DE-B- 1 237 838
- FR-A- 1 300 937
- JP-A- 11 033 700
- US-B1- 6 273 612

## Beschreibung

Die vorliegende Erfindung betrifft ein Verfahren zur Herstellung eines Kolbens für einen Verbrennungsmotor.

Der Kolbenbolzen verbindet den Kolben über ein Pleuel mit der Kurbelwelle des Verbrennungsmotors. Der Kolbenbolzen ist in den in Bolzennaben eingebrachten Nabenbohrungen gelagert und kann sich bei der oszillierenden Bewegung des Kolbens aufgrund der enormen auf den Kolben wirkenden Kräfte verbiegen. Die Bolzennaben zählen zu den am höchsten beanspruchten Partien eines Kolbens. Bei hohen Kolbenbelastungen besteht die Gefahr der Rissbildung an den Nabenbohrungen. Daher wird nach Wegen gesucht, insbesondere in Leichtmetallkolben die Nabenbohrungen zu entlasten. Dies geschieht bspw. durch örtliche geometrische Veränderungen in der üblicherweise zylindrischen Nabenbohrung, welche die durch die Verformung des Kolbenbolzens ausgelöste Beanspruchung reduzieren. Derartige geometrische Veränderungen können bspw. Entlastungstaschen, ovale Nabenbohrungen oder konische oder ballige, der Biegelinie des Kolbenbolzens angepasste Bohrungen sein (zu letzteren siehe bspw. WO 96/07841 A1). Derartige geometrische Veränderungen werden bisher durch eine aufwendige Feinbearbeitung der Nabenbohrung hergestellt, wie bspw. aus der gattungsgemäßen DE 102 55 731 A1 bekannt.

Aus der deutschen Patentanmeldung 10 2004 059 492.9 (=DE 10 2005 055 365 A1) sind Kolben mit Gleitlagerflächen aufweisenden Nabenbohrungen bekannt. Die Gleitlagerflächen sind mit einer selbstschmierenden Beschichtung aus einem Harz mit darin eingelagerten Festschmierstoffpartikeln beschichtet. Ebenso ist aus der US 6,273,612 B1 ein Gleitlager bekannt, dessen innere Lagerfläche nur teilweise mit einer selbstschmierenden Beschichtung aus einem Harz mit darin eingelagerten Festschmierstoffpartikeln beschichtet ist.

Die Aufgabe der vorliegenden Erfindung besteht darin, ein Verfahren zur Herstellung eines Kolbens bereitzustellen, dessen Nabenbohrungen auf besonders einfache Weise mit örtlichen geometrischen Abweichungen versehen sein können.

Die Lösung besteht in einem Verfahren mit den Merkmalen des Patentanspruchs 1.

Das erfindungsgemäße Verfahren zeichnet sich dadurch aus, dass bei zunächst mit zylindrischer Innenkontur hergestellte Bohrungen werden auf die Innenflächen dieser Bohrungen mittels eines Beschichtungswerkzeugs ein Beschichtungsmittel mittels Rotationszerstäuben aus einer in die Bohrung eingeführten rotierenden Düse aufgebracht wird, wobei das Rotationszerstäuben bei einer Rotationsgeschwindigkeit der Düse von 14.000 bis 18.000 Umdrehungen pro Minute durchgeführt wird.

Das Beschichtungsmittel umfasst ein Harz mit darin eingelagerten Festschmierstoffpartikeln, welches derart aufgebracht wird, so dass die resultierende Beschichtung die mindestens eine geometrische Abweichung von der zylindrischen Innenkontur der Nabenbohrungen ausbildet. Die mindestens eine geometrische Abweichung wird durch Variation der Menge des vom Beschichtungswerkzeug abgegebenen Beschichtungsmittels und/oder durch Variation des Vorschubs des Beschichtungswerkzeugs in der zu beschichtenden Bohrung ausgebildet.

Mit der vorliegenden Erfindung ist es möglich, Nabenbohrungen mit mindestens einer geometrischen Abweichung von der zylindrischen Innenkontur und mit einer selbstschmierenden Beschichtung ihrer Innenflächen in ein und demselben Arbeitsgang herzustellen. Dies bedeutet eine erhebliche Zeit- und Kostenersparnis. Die aufwändige und sehr komplexe spanabhebende Bearbeitung der metallischen Innenflächen der Nabenbohrungen zum Einbringen der mindestens einen geometrischen Abweichung entfällt. Ferner sind keine Lagerbuchsen mehr erforderlich, um eine ausreichende Schmier- und Fresssicherheit der Nabenbohrungen zu erreichen. Die Beschichtung kann ohne vorheriges Aufbringen einer Haftschicht erfolgen. Die gewünschte Maßhaltigkeit der Nabenbohrung wird zuverlässig erzielt. Die Beständigkeit und damit die Lebensdauer der Kolbenbolzen-Lagerung werden infolge der verbesserten Schmiereigenschaften gegenüber den bisher bekannten Beschichtungen aus Metalllegierungen erheblich verbessert.

Vorteilhafte Weiterbildungen ergeben sich aus den Unteransprüchen.

Die mindestens eine geometrische Abweichung kann als mindestens eine Entlastungstasche und/oder Ovalität (bspw. als Hoch- oder Querovalität) und/oder als Formbohrung ausgebildet sein, wie sie bspw. in der WO 96/07841 A1 offenbart ist.

In vorteilhafter Weise kann in der Beschichtung mindestens ein Ölsammelraum vorgesehen sein, um die Schmierung der Kolbenbolzenlagerung noch weiter zu verbessern. Der mindestens eine Ölsammelraum kann als in Nabenachsrichtung verlaufender Kanal, als radial zur Nabenachsrichtung ganz oder teilweise umlaufender Kanal und/oder als taschenförmige Ausnehmung ausgebildet sein.

Die Mindestdicke der Beschichtung hängt von den Anforderungen des Einzelfalls ab und kann bspw. 5 µm bis 15 µm betragen.

Vorzugsweise ist das in der Beschichtung enthaltene Harz ein thermisch ausgehärtetes Harz, insbesondere ein Polyamidimidharz, welches sehr temperaturbeständig ist und den Belastungen, welchen die Kolbenbolzenlagerung im Betrieb ausgesetzt ist, besonders gut standhalten kann.

Es hat sich erwiesen, dass ein Anteil von 50 Gew.-% bis 60 Gew.-% an Festschmierstoffpartikeln in der Beschichtung besonders vorteilhafte Schmiereigenschaften aufweist. Hierbei können die Festschmierstoffpartikel insbesondere aus einem Werkstoff bestehen, der aus der Werkstoffgruppe umfassend Grafit, Molybdänsulfid, Wolframdisulfid, hexagonales Bornitrid und PTFE (Polytetrafluorethylen) ausgewählt ist. Dabei bestehen die Festschmierstoffpartikel vorteilhafterweise nur aus einem Werkstoff. Es ist dabei besonders günstig, wenn alle Festschmierstoffpartikel aus demselben Werkstoff bestehen oder Festschmierstoffpartikel gemischt werden, die aus zwei unterschiedlichen Werkstoffen bestehen, bspw. Festschmierstoffpartikel aus Grafit mit Festschmierstoffpartikeln aus einem Metallsulfid gemischt werden. Für eine besonders wirksame Schmierung weisen die Festschmierstoffpartikel eine Partikelgröße von 1 µm bis 3 µm auf.

Eine mögliche nicht erfindungsgemäße Alternative besteht darin, das Beschichtungsmittel in einer gleichmäßigen Dicke aufzubringen und die mindestens eine geometrische Abweichung durch eine Nachbearbeitung der resultierenden Beschichtung auszubilden. Dies ist naturgemäß wesentlich aufwändiger, als die mindestens eine geometrische Abweichung unmittelbar während des Beschichtungsprozesses einzubringen. Das Resultat, nämlich ein Kolben mit Nabenbohrungen, deren Beschichtung die mindestens eine geometrische Abweichung von der zylindrischen Innenkontur der Nabenbohrungen ausbildet, ist aber dasselbe.

Das Beschichtungsmittel wird auf Innenflächen der Bohrungen mit einer Oberflächenrauhigkeit von Ra (Mittenrauwert) ≤ 0,8 µm aufgebracht.

Um die Haftung des Beschichtungsmittels auf der Innenfläche der Bohrung noch weiter zu verbessern, kann die Innenflächen der Bohrungen vor und/oder während des Aufbringens des Beschichtungsmittels vorgewärmt werden, vorzugsweise bis zu einer Temperatur von 50°C bis 80°C.

Eine bevorzugte Weiterbildung des erfindungsgemäßen Verfahrens besteht darin, ein thermisch aushärtbares Beschichtungsmittel zu verwenden und dasselbe unmittelbar nach Beendigung des Aufbringens einer Wärmebehandlung zu unterziehen, vorzugsweise bei einer Temperatur von 200°C.

Ein Ausführungsbeispiel der Erfindung wird im Folgenden anhand der beigefügten Zeichnungen näher erläutert. Es zeigen in einer schematischen, nicht maßstabsgetreuen Darstellung:
- Fig. 1: eine teilweise geschnittene Darstellung einer Ausführungsform eines erfindungsgemäßen Kolbens;
- Fig. 2: eine Teildarstellung der Nabenbohrung des Kolbens gemäß Fig. 1 im Schnitt;
- Fig. 3: eine Ansicht der Nabenbohrung gemäß Fig. 2 in Richtung des Pfeils A in Fig. 2;

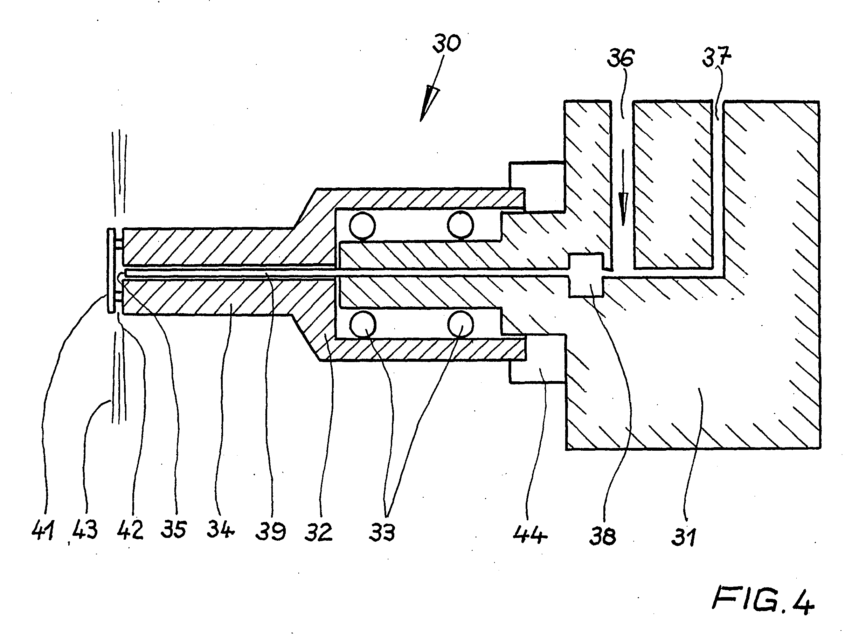

- Fig. 4: eine schematische Darstellung eines Beschichtungswerkzeugs.

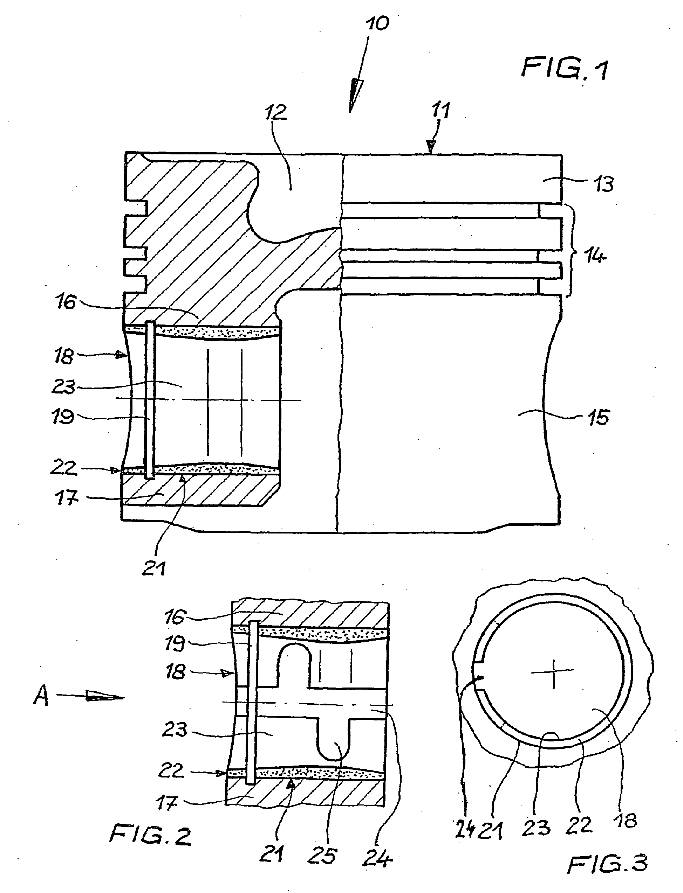

Fig. 1 zeigt ein Ausführungsbeispiel eines durch das erfindungsgemäße Herstellungsverfahren erhaltenen Kolbens 10, der in diesem Fall ein einteiliger Kolben 10 ist. Der Kolben 10 besteht in an sich bekannter Weise bspw. aus einer Leichtmetalllegierung. Der Kolben 10 weist einen Kolbenkopf 11 mit einer Verbrennungsmulde 12 und einer ringförmig umlaufenden Seitenwand mit einem Feuersteg 13 und einer Ringpartie 14 zur Aufnahme von Kolbenringen (nicht dargestellt) auf. Der Kolben 10 weist ferner unterhalb des Kolbenkopfs 11 einen Kolbenschaft 15 auf. Der Kolbenschaft 15 weist zwei sich an der Unterseite des Kolbenkopfs 11 abstützende Nabenanbindungen 16 auf, die in zwei Kolbennaben 17 übergehen. Jede Kolbennabe ist mit einer mit einer Sicherungsringnut 19 für einen Kolbenring (nicht dargestellt) ausgestatteten Nabenbohrung 18 versehen. Je nach Bauart des Kolbens (zwei- oder mehrteilig) können selbstverständlich auch mehr als zwei Kolbennaben mit entsprechenden Nabenbohrungen vorgesehen sein.

Die Nabenbohrungen 18 sind im Ausführungsbeispiel Formbohrungen mit einer definierten, von der Zylinderform abweichenden Innenkontur 23, wie sie bspw. in der WO 96/07841 A1 offenbart sind. Diese Gestaltung dient der Entlastung des Kolbenbolzens im Betrieb, um die Gefahr von Nabenanrissen zu vermeiden. Andere Gestaltungen einer Nabenbohrung, die demselben Zweck dienen, sind bspw. mit einer Ovalität (hoch- und/oder queroval) oder mit Entlastungstaschen versehene Nabenbohrungen (nicht dargestellt). Diese Gestaltungen sind an sich bekannt.

Die Nabenbohrungen 18 sind erfindungsgemäß so ausgestaltet, dass sie aus einer zylinderförmigen Bohrung 21 und einer Beschichtung 22 zusammengesetzt sind. Dabei ist die Oberflächenkontur der Beschichtung 22 so gestaltet, dass sich die gewünschte, von der Zylinderform abweichende Innenkontur 23 der Formbohrung ergibt. In vergleichbarer Weise kann auch eine Ovalität bzw. eine Entlastungstasche durch die Oberflächenkontur der Beschichtung 22 gebildet sein (nicht dargestellt). Die Beschichtung 22 besteht im Wesentlichen aus einem Harz mit darin eingelagerten Festschmierstoffpartikeln und ist somit eine selbstschmierende Beschichtung.

Im Ausführungsbeispiel ist die Beschichtung ferner mit Ölsammelräumen in Form eines sich in Nabenachsrichtung erstreckenden Kanals 24 versehen, von dem aus sich Taschen 25 radial erstrecken. Diese Ölsammelräume dienen dazu, die Schmierung der Kolbenbolzenlagerung noch weiter zu verbessern. Sie können selbstverständlich für jede gewünschte Anwendung in beliebiger Form und Größe ausgebildet und beliebig zueinander angeordnet sein.

Zur Herstellung einer Nabenbohrung 18 wird zuerst die zylindrische Bohrung 21 in die Kolbennabe 17 eingebracht und in bekannter Weise mechanisch fertig bearbeitet. Die Oberflächenrauhigkeit Ra (Mittenrauwert) kann der in der DE 41 11 368 A1 angegebenen entsprechen, wobei im Allgemeinen für Bohrungsdurchmesser kleiner 30 mm die Ra-Werte 0,63 µm oder weniger betragen und für Bohrungsdurchmesser zwischen 30 und 60 mm Ra-Werte von 0,8 µm oder weniger erreicht werden. Der Bohrungsdurchmesser wird im Ausführungsbeispiel vor dem Beschichten derart gewählt, dass der Kolbenbolzen in der fertigen Nabenbohrung 18 ein diametrales Spiel von 10 µm bis 40 µm erhält. Die zylindrische Bohrung 21 sollte so gereinigt sein, dass Späne, sonstige Partikel, Bearbeitungsöle und dergleichen vollständig entfernt sind. Die Innenfläche der zylindrischen Bohrung 21 kann auch phosphatiert sein.

Falls zusätzliche Ölsammelräume, bspw. in Form von Kanälen 24 oder Taschen 25 vorgesehen sein sollen, werden vor der Beschichtung in an sich bekannter Weise entsprechende Abdeckschablonen in der zylindrischen Bohrung 21 angebracht. Die Abdeckschablonen verhindern eine Beschichtung der abgedeckten Bereiche der zylindrischen Bohrung 21. Als Alternative kann die fertige Beschichtung nachbearbeitet und auf diese Weise mit Ölsammelräumen versehen werden.

Das im Ausführungsbeispiel gewählte Beschichtungsmittel ist aus einem thermisch aushärtbaren Harz mit darin eingelagerten Festschmierstoffpartikeln aus einem oder mehreren der Materialien Grafit, Molybdänsulfid, Wolframdisulfid, hexagonales Bornitrid und PTFE gebildet. Im Ausführungsbeispiel ist das Harz ein sehr temperaturbeständiges Polyamidimid, und der Festschmierstoff ist eine Mischung aus Molybdänsulfid- und Grafitpartikeln mit einer Partikelgröße von 1 µm bis 3 µm. Die Menge des Festschmierstoffes ist im Ausführungsbeispiel so gewählt, dass die fertige Beschichtung etwa 50 bis 60 Gew.-% Festschmierstoffpartikel enthält. Die Viskosität des Beschichtungsmittels ist derart eingestellt, dass bei ausreichender Applizierung eine Tropfenbildung vermieden wird.

Zum Aufbringen der Beschichtung auf die Innenflächen der zylindrischen Bohrung 21 dient im Ausführungsbeispiel eine Vorrichtung 30 zum Rotationszerstäuben. Die Vorrichtung 30 weist einen Grundkörper 31 auf, der mit einem Düsenkörper 32 verbunden ist. Der Düsenkörper 32 ist auf dem Grundkörper mittels eines Lagers 33 rotierbar gelagert. Der Düsenkörper 32 ist mit einer eine Austrittsöffnung 35 aufweisenden Düse 34. Der Grundkörper 31 besitzt jeweils Zuführkanäle 36, 37, die für das flüssige Beschichtungsmaterial sowie für Druckluft bestimmt sind und in eine Mischkammer 38 zur Vermischung und Dosierung enden. Von der Mischkammer 38 erstreckt sich ein Austrittskanal 39 durch den Düsenkörper 32 und mündet in die Austrittsöffnung 35. Senkrecht zur Austrittsöffnung 35 ist eine Prallplatte 41 angeordnet, so dass zwischen der Prallplatte 41 und dem Düsenkörper 32 ein ringförmigen Spalt 42 mit einer Breite von im Ausführungsbeispiel 0,5 mm entsteht. Durch den Spalt 42 tritt das Beschichtungsmittel-Luft-Gemisch in Form eines Sprühstrahls 43 radial und beabstandet vom Düsenkörper 32 aus.

Mittels eines Antriebs 44 wird der Düsenkörper 32 in Rotation versetzt und rotiert im Ausführungsbeispiel im Drehzahlbereich von 14.000 bis 18.000 Umdrehungen pro Minute. Das aus der Austrittsöffnung 35 austretende Beschichtungsmittel-LuftGemisch wird durch die an der Austrittsöffnung 35 auftretenden Fliehkräfte derart beschleunigt, dass es als scheibenförmiger Sprühstrahl 43 radial austritt. Da der Sprühstrahl 43 in Bolzenachsrichtung schmal ausgebildet ist, kann die zu beschichtende Innenfläche der zylindrischen Bohrung 21 in Bolzenachsrichtung durch einfache Zufuhrkontrolle der Beschichtungsmittel-Luft-Mischung scharf begrenzt werden. Im Ausführungsbeispiel sind Düsen 34 mit einem Durchmesser im Bereich zwischen 5 und 25 mm und mit Tiefen bis zu 50 mm verfügbar, so dass mit der Vorrichtung 30 zylindrische Bohrungen 21 für Kolben aller Motortypen beschichtet werden können. Der Durchmesser der Düse 34 wird in der Regel so gewählt, dass er etwa dem halben Durchmesser der zylindrischen Bohrung 21 entspricht

Zur Durchführung des Beschichtungsverfahrens eignet sich auch ein Schleuderapparat S-520 der Firma Sprimag, Kirchheim.

Die Applizierung des Beschichtungsmittel-Luft-Gemischs erfolgt im Ausführungsbeispiel auf die auf 50°C bis 80°C vorgewärmte Innenfläche der zylindrischen Bohrung 21. Die Düse 34 wird zentrisch von außen nach innen in die zylindrische Bohrung 21 eingefahren. Zur Ausgestaltung der von der zylindrischen Innenkontur geometrischen Abweichung, bspw. der in Fig. 1 dargestellten Formbohrung, wird der Vorschub der Düse 34 bspw. in einem Bereich von 10 bis 20 mm/s variiert Zusätzlich oder als Altemative kann die Menge des aus der Austrittsöffnung 35 der Düse 34 austretenden Beschichtungsmittel-Luft-Gemischs variiert werden. Hierfür ist es zweckmäßig, dass die Vorrichtung 30 computergesteuert arbeitet. Wenn die Düse 34 das Ende der zylindrischen Bohrung 21 erreicht hat, wird die Vorrichtung 30 ausgeschaltet und zurückgefahren.

Wenn in der zylindrischen Bohrung 21 Abdeckschablonen zur Herstellung von Ölsammelräumen vorgesehen sind, wird die Zufuhr des Beschichtungsmittel-Luft-Gemischs beim Erreichen einer solchen Schablone abgeschaltet, so dass Reste des Sprühstrahls auf die Abdeckschablone gespritzt werden. Wenn das Ende der Abdeckschablone erreicht ist, wird die Zufuhr des Beschichtungsmittel-Luft-Gemischs wieder erreicht ist.

Wenn das Beschichtungsmittel aufgebracht ist, wird es thermisch ausgehärtet, indem der Kolben bzw. der die beschichteten Nabenbohrungen 18 aufweisende Kolbenbestandteil in einen Ofen verbracht und darin im Ausführungsbeispiel zwischen 10 und 20 Minuten auf einer Temperatur von 200°C gehalten.

Die fertige Beschichtung 22 ist im Ausführungsbeispiel an ihrer dünnsten Stelle etwa 5 µm bis 20 µm dick und das diametrale Bolzenspiel beträgt etwa 10 µm bis 20 µm. Dieses enge Spiel ist besonders vorteilhaft, um Geräusche durch Bolzentickern zu vermeiden. Die Beschichtung 22 gewährleistet außerdem, dass trotz dem engen Spiel keine Fresser auftreten.

## Patentansprüche

1. Verfahren zur Herstellung eines Kolbens (10) für einen Verbrennungsmotor, mit mindestens zwei Nabenbohrungen (18) zur Aufnahme eines Kolbenbolzens, wobei die Nabenbohrungen (18) mindestens eine geometrische Abweichung von einer zylindrischen Innenkontur aufweisen, wobei zunächst Bohrungen (21) mit zylindrischer Innenkontur hergestellt werden, **dadurch gekennzeichnet, dass** anschließend auf die Innenflächen dieser Bohrungen (21) mittels eines Beschichtungswerkzeugs (30) ein Beschichtungsmittel umfassend ein Harz mit darin eingelagerten Festschmierstoffpartikeln aufgebracht wird, derart, dass die resultierende Beschichtung (22) die mindestens eine geometrische Abweichung von der zylindrischen Innenkontur der Nabenbohrungen (18) ausbildet, und, dass das Beschichtungsmittel (22) mittels Rotationszerstäuben aus einer in die Bohrung (21) eingeführten rotierenden Düse (34) bei einer Rotationsgeschwindigkeit von 14.000 bis 18.000 Umdrehungen pro Minute aufgebracht wird.

2. Verfahren nach Anspruch 1, **dadurch gekennzeichnet, dass** eine geometrische Abweichung durch Variation der Menge des vom Beschichtungswerkzeug (30) abgegebenen Beschichtungsmittels und/oder durch Variation des Vorschubs des Beschichtungswerkzeugs (30) ausgebildet wird.

3. Verfahren nach einem der Ansprüche 1 bis 2, **dadurch gekennzeichnet, dass** das Beschichtungsmittel auf Innenflächen der Bohrungen (21) mit einer Oberflächenrauhigkeit von Ra (Mittenrauwert) ≤ 0,8 µm aufgebracht wird.

4. Verfahren nach einem der Ansprüche 1 bis 3 **dadurch gekennzeichnet, dass** die Innenflächen der Bohrungen (21) vor und/oder während des Aufbringens des Beschichtungsmittels vorgewärmt werden, vorzugsweise bis zu einer Temperatur von 50°C bis 80°C.

5. Verfahren nach einem der Ansprüche 1 bis 4 **dadurch gekennzeichnet, dass** ein thermisch aushärtbares Beschichtungsmittel (22) verwendet wird, das unmittelbar nach Beendigung des Aufbringens einer Wärmebehandlung unterzogen wird, vorzugsweise bei einer Temperatur von 200°C.

6. Verfahren nach Anspruch 5, **dadurch gekennzeichnet, dass** als Beschichtungsmittel (22) ein ausgehärtete Harz, insbesondere ein Polyamidimidharz, verwendet wird.

7. Verfahren nach Anspruch 6, **dadurch gekennzeichnet, dass** dem Beschichtungsmittel (22) 50 Gew.-% bis 60 Gew.-% Festschmierstoffpartikel beigemischt wird.

8. Verfahren nach Anspruch 7, **dadurch gekennzeichnet, dass** die verwendeten Festschmierstoffpartikel aus einem Werkstoff bestehen, der aus der Werkstoffgruppe umfassend Grafit, Molybdänsulfid, Wolframdisulfid, hexagonales Bornitrid und PTFE (Polytetrafluorethylen) ausgewählt ist.

9. Verfahren nach Anspruch 8, **dadurch gekennzeichnet, dass** die verwendeten Festschmierstoffpartikel eine Partikelgröße von 1 µm bis 3 µm aufweisen.

10. Verfahren nach Anspruch 1, **dadurch gekennzeichnet, dass** der Beschichtung (22) in einer Mindestdicke von 5 µm bis 20 µm aufgebracht wird.

## Claims

1. Method for the production of a piston (10) for an internal combustion engine comprising at least two hub bores (18) for holding a piston pin, wherein the hub bores (18) have at least one geometric deviation from a cylindrical inner contour, wherein bores (21) with a cylindrical inner contour are then produced, **characterised in that** a coating agent comprising a resin with solid lubricant particles embedded therein is subsequently applied to the inside surfaces of said bores (21) by means of a coating tool (30) such that the resulting coating (22) forms at least one geometric deviation from the cylindrical inner contour of the hub bores (18) and that the coating agent (22) is applied by means of rotating atomisation from a rotating nozzle (34) introduced into the bore (21) at a rotation speed of the nozzle of 14,000 to 18,000 rotations per minute.

2. Method according to claim 1, **characterised in that** a geometric deviation is configured by varying the amount of the coating agent given off by the coating tool (30) and/or by varying the advance of the coating tool (30).

3. Method according to claim 1 or claim 2, **characterised in that** the coating agent is applied to inside surfaces of the bores (21) with a surface roughness of Ra (average roughness value) ≤ 0.8 µm.

4. Method according to any one of claims 1 to 3, **characterised in that** the inside surfaces of the bores (21) are pre-heated before and/or during application of the coating agent, preferably up to a temperature of 50°C to 80°C.

5. Method according to any one of claims 1 to 4, **characterised in that** a thermosetting coating agent (22) is used, which is subjected to heat treatment immediately after completing the application, preferably at a temperature of 200°C.

6. Method according to claim 5, **characterised in that** a hardened resin, in particular a polyamide resin, is used as a coating agent (22).

7. Method according to claim 6, **characterised in that** 50% to 60% by weight of solid lubricant particles are mixed with the coating agent (22).

8. Method according to claim 7, **characterised in that** the solid lubricant particles used consist of a substance selected from the group of substances containing graphite, molybdenum sulphide, tungsten disulphide, hexagonal boron nitride and PFTE (polytetrafluoroethylene).

9. Method according to claim 8, **characterised in that** the solid lubricant particles used have a particle size of 1 µm to 3 µm.

10. Method according to claim 1, **characterised in that** the coating (22) is applied at a minimum thickness of 5 µm to 20 µm.

## Revendications

1. Procédé de fabrication d'un piston (10) pour un moteur à combustion, comprenant au moins deux alésages de moyen (18) pour l'admission d'un axe de piston, les alésages de moyen (18) présentant au moins un écart géométrique par rapport à un contour cylindrique intérieur, des alésages (21) avec un contour cylindrique intérieur étant à cet égard fabriqués dans un premier temps, **caractérisé en ce qu'**un produit de revêtement comprenant une résine contenant des particules de lubrifiant solide est appliqué ensuite sur les surfaces intérieures de ces alésages (21) au moyen d'un outil d'application de revêtement (30), de telle manière que la couche (22) résultante forme au moins un écart géométrique par rapport au contour cylindrique intérieur des alésages de moyen (18), et le produit de revêtement (22) est appliqué au moyen d'une pulvérisation par rotation à partir d'un gicleur rotatif (34) introduit dans l'alésage (21) à une vitesse de rotation de 14 000 à 18 000 tours par minute.

2. Procédé selon la revendication 1, **caractérisé en ce qu'**un écart géométrique est formé grâce à une variation de la quantité du produit de revêtement émanant de l'outil d'application de revêtement (30) et/ou grâce à une variation de l'avance de l'outil d'application de revêtement (30).

3. Procédé selon l'une quelconque des revendications 1 à 2, **caractérisé en ce que** le produit de revêtement est appliqué sur les surfaces internes des alésages (21) avec une rugosité de surface RA (valeur de rugosité moyenne) ≤ 0,8 µm.

4. Procédé selon l'une quelconque des revendications 1 à 3, **caractérisé en ce que** les surfaces internes des alésages (21) sont préchauffées avant et/ou pendant l'application du produit de revêtement, de préférence jusqu'à une température de 50 °C à 80 °C.

5. Procédé selon l'une quelconque des revendications 1 à 4, **caractérisé en ce qu'**un produit de revêtement (22) thermiquement durcissable est appliqué, qui est immédiatement soumis à un traitement de chaleur, de préférence à une température de 200 °C, après achèvement de l'application.

6. Procédé selon la revendication 5, **caractérisé en ce qu'**une résine durcie, en particulier une résine polyamidimide est utilisée en tant que produit de revêtement (22).

7. Procédé selon la revendication 6, **caractérisé en ce que** le produit de revêtement (22) est mélangé à 50 % en poids à 60 % en poids de particules de lubrifiant solide.

8. Procédé selon la revendication 7, **caractérisé en ce que** les particules de lubrifiant solide utilisées sont composées d'un matériau choisi dans le groupe de matériaux comprenant le graphite, le disulfure de molybdène, le disulfure de tungstène, le nitrure de bore hexagonal et le PTFE (polytétrafluoroéthylène).

9. Procédé selon la revendication 8, **caractérisé en ce que** les particules de lubrifiant solide utilisées présentent une taille de particule de 1 µm à 3 µm.

10. Procédé selon la revendication 1 [sic], **caractérisé en ce que** le revêtement (22) est appliqué avec une épaisseur minimale de 5 µm à 20 µm.
